# EUROPÄISCHE PATENTANMELDUNG

(11) **EP 1 442 818 A1**
(43) Veröffentlichungstag der Anmeldung: **04.08.2004**
(21) Anmeldenummer: 03001807.1
(22) Anmeldetag: 29.01.2003
(51) Int. Cl.: B23K 9/23, B23K 26/32, B23K 15/00, B23K 26/02, B23K 26/06

(54) **Verfahren zur Herstellung von Mischverbindungen zwischen schwarzen Temperguss und Stahl**

(71) Anmelder: ES Automobilguss GmbH, 08304 Schönheide (DE)
(72) Erfinder: Kühne, Thomas, 08304 Schönheide (DE); Spitzer, Wolfgang, 08304 Schönheide (DE); Neubert, Jahn, 06118 Halle (DE)

(57) **Zusammenfassung**

Die Erfindung beschreibt einen wirtschaftlichen, beanspruchungsgerechten und serienreifen Fügeprozess von Bauteilen (1,2) in Mischverbindungen der Werkstoffe schwarzer Temperguss mit Stahl durch die Vereinigung von Wärmebehandlungs- und Fügeprozessen in einem Arbeitsgang zu ermöglichen. Dieses wird dadurch erreicht, dass unter Verwendung von Hochenergiestrahlen (4.1,4.2) mit unterschiedlichen Strahlparametern sowohl eine dem Gusswerkstoff metallurgisch günstige Vorwärmung ermöglicht wird als auch durch Veränderung der Strahleigenschaften im gleichen Arbeitsgang die Verbindung hergestellt wird.

## Beschreibung

Die Erfindung bezieht sich auf ein Verfahren zur Herstellung von Mischverbindungen zwischen Gussteilen aus schwarzem Temperguss mit Teilen aus Stahl sowie von nach diesem Verfahren hergestellten Bauteilen für die Automobilindustrie.

Die Herstellung von Verbindungen zwischen Werkstoffen mit unterschiedlichen mechanischen Eigenschaften ist Bestandteil einer Vielzahl von konstruktiven Lösungen in vielen Bereichen der Fertigung, da Bauteile zur Kraft- oder zur Medienübertragung oftmals Aufgabenstellungen zu erfüllen haben, welche mit keinem bisher bekannten Einzelwerkstoff abzudecken sind. So stellt sich beispielsweise bei Baugruppen zur Kraftübertragung bei Fahrzeugen das Problem, ein Zahnrad aus Stahl mit einem hohlen Gehäuseteil, welches aufgrund seiner Geometrie als Gussteil ausgelegt ist, zu verbinden. Diese Gussteile bestehen vorzugsweise aus Stahlguss, Sphäroguss und Temperguss mit Kohlenstoffgehalten meist über 2%. Der schwarze Temperguss zeichnet sich hierbei durch seine besonderen Eigenschaften gegenüber anderen Gusswerkstoffen aus und ist deshalb für die beschriebene Aufgabenstellung hervorragend geeignet. Hergestellt wird der schwarze Temperguss mit folgender Richtanalyse und anschließender Wärmebehandlung. Richtanalyse schwarzer Temperguss:

| C | Si | Mn | S | Cr |
|---|---|---|---|---|
| 2,50-2,80% | 1,20-1,50% | 0,30-0,60% | <0,200% | <0,085% |

Das Schweißen nach konventionellen Methoden als Verfahren zur Herstellung dieser Mischverbindung gestaltet sich aufgrund der unterschiedlichen Werkstoffeigenschaften der Fügepartner als problematisch. Gusswerkstoffe weisen aufgrund ihrer hohen Kohlenstoffgehalte eine nur sehr eingeschränkte Schweißeignung auf, deren Beherrschbarkeit jedoch mit unterschiedlichen technologischen Methoden wie Vorwärmen, unterschiedliche Zusatzwerkstoffe und schweißgerechte Konstruktion besonders im Bereich von Reparatur aber auch in zunehmenden Maße in Neukonstruktionen mit konventionellen Lichtbogenprozessen nachgewiesen ist. Eine wirtschaftliche Anordnung des konventionellen Schweißens als Finalprozess ist aufgrund der auftretenden Verzüge und der zum Teil erforderlichen Wärmenachbehandlungen nicht möglich.

Eine derzeitige Methode zur Herstellung solcher Mischverbindungen ist das Fügen mittels Schrauben oder Nieten. Diese Verfahren schränken aber den konstruktiven Spielraum hinsichtlich Leichtbau und Wirtschaftlichkeit sehr stark ein, da die Voraussetzung für die Herstellung solcher Verbindungen durch das Vorsehen und Anarbeiten von Flanschen mit ausreichend Spannfläche zu schaffen ist und somit die Masse und die Geometrie des Bauteiles negativ beeinflusst wird.

Gegenstand der Erfindung ist es, einen wirtschaftlichen, beanspruchungsgerechten und serienreifen Fügeprozess von Bauteilen in Mischverbindungen der genannten Werkstoffe (schwarzer Temperguss mit Stahl; Anspruch 2) durch die Vereinigung von Wärmebehandlungs- und Fügeprozessen in einem Arbeitsgang zu ermöglichen.
Dieses wird dadurch erreicht, dass unter Verwendung von Hochenergiestrahlen mit unterschiedlichen Strahlparametern sowohl eine dem Gusswerkstoff metallurgisch günstige Vorwärmung ermöglicht wird als auch durch Veränderung der Strahleigenschaften im gleichen Arbeitsgang die Verbindung hergestellt wird (Anspruch 1).

Die Vorwärmung mittels des Hochenergiestrahles erfolgt so, dass die Leistungsintensität an der Bauteiloberfläche durch Änderung der Fokussierung dieses Strahles ein bestimmtes lokal begrenztes Temperaturfeld erzeugt wird, welches eine Erwärmung der Verbindungszone bewirkt ohne Auswirkungen (Anlasseffekte) im gesamten Bauteil zu erzeugen. Durch die so erzielte Verringerung der Abkühlgeschwindigkeit in der Fügezone verbessern sich die mechanischtechnologischen Eigenschaften der Verbindung so, dass ein nahezu kerbfreies Verbindungsprofil in Wärmeeinflusszone und Schweißgut erzeugt werden kann.
Ein weiterer Vorteil dieses Verfahrensschrittes ergibt sich aus der Möglichkeit den Einfluss der Vorwärmung lokal auf die zu fügende Zone einzuschränken und somit auch das Verbinden der Bauteile als Finalprozess zu ermöglichen, da Verzüge und metallurgische Effekte (Anlassen) nur auf diesen Bereich beschränkt bleiben.

Zur Herstellung der Verbindung wird die Fokussierung des Hochenergiestrahles auf eine zum Schweißen geeignete Leistungsintensität eingestellt und beide Fügepartner miteinander verschweißt. Der Vorteil des Schweißens mit diesem Hochenergiestrahl besteht darin, dass hochkonzentriert auf einen sehr kleinen Flächenanteil bezogen sehr viel Energie berührungslos eingebracht wird. Der Einfluss des im Gefüge durch das Schweißen veränderten Bereiches auf das Gesamtbauteil ist somit fast vernachlässigbar klein. Um diese metallurgischen Gefügeveränderungen weiterhin zu minimieren, besteht die Möglichkeit die Eigenschaften der Verbindung durch Einsatz unterschiedlicher auf die Fügepartner abgestimmter Zusätze in Form von Draht oder Folien zu verbessern.

Eine Veränderung der Leistungsintensität wird in diesem Fall über die Veränderung des Abstandes der Energiequelle zur Bauteiloberfläche erzeugt. Dieses bewirkt bei konstant abgeforderter Leistung aufgrund der Divergenz des Hochenergiestrahles (Abhängigkeit vom Abstand der Quelle) eine Veränderung der Verteilung dieser Energie auf der Bauteiloberfläche.

Für den speziellen Fall des Einsatzes von drahtförmigem Schweißzusatz ist eine spezielle Form der Nahtvorbereitung notwendig, welche durch das Herstellen einer Spielpassung im Fügezonenbereich erzeugt wird. Hierzu erhalten die Bauteile die für die Zentrierung zueinander notwendige und bisher schon verwendete Passung, während der Fügebereich in der zu verschweißenden Tiefe mit einem Spiel (z.B.: C9/c9) vorbereitet wird.

Im Folgenden wird die Erfindung mit Hilfe von Abbildungen beschrieben und näher erläutert.
- Fig. 1:: Ausführungsbeispiel eines erfindungsgemäßen Bauteiles während des Vorwärmens mit defokussiertem Hochenergiestrahl
- Fig. 2:: Ausführungsbeispiel eines erfindungsgemäßen Bauteiles während des Schweißens mit fokussiertem Hochenergiestrahl
- Fig. 3:: Detail X in Fig. 1; vergrößert 2:1.

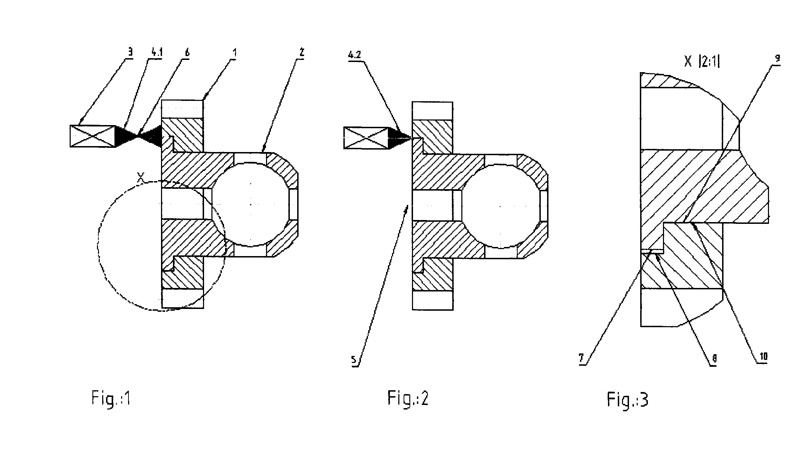

In Fig. 1 ist ein Gehäuse mit 1 und ein damit zu verbindendes Zahnrad mit 2 bezeichnet. Dieses Gehäuse 1 besteht aus schwarzem Temperguss und das Zahnrad 2 aus Stahl. Die Quelle 3 des Hochenergiestrahles 4.1 ist radial zur Achse 5 mit Ausrichtung auf die zu fügenden Flächen 7 und 8 starr und koaxial zur Achse 5 verschiebbar angeordnet. Der Hochenergiestrahl 4.1 ist divergent, das bedeutet er breitet sich nach Überschreiten seines Brennpunktes 6 mit einem definierten Winkel aus. Die Intensität der Leistung an der Oberfläche der Bauteile 1 und 2 ist von der Größe der bestrichenen Fläche des als räumlich kegelstumpfähnlich zu betrachtenden Hochenergiestrahles 4.1 abhängig, welche über den Abstand der Quelle 3 zur Oberfläche der Bauteile 1 und 2 einstellbar ist.

In Fig. 2 zeigt eine hinsichtlich der Bauteile 1 und 2 ähnliche Anordnung wie Fig. 1 und unterscheidet sich nur durch die Anordnung der Quelle 3 des Hochenergiestrahles 4.2. Durch die Verschiebung der Quelle 3 des Hochenergiestrahles 4.2 in koaxial zur Achse 5 liegt nun sein Brennpunkt auf den zu verbindenden Flächen 7 und 8 und die resultierende Leistungsdichte reicht aus, um beide Flächen 7 und 8 durch Schweißen miteinander zu verbinden.

Fig. 3 stellt die zum Fügen des Gehäuses 1 und des Zahnrades 2 zu wählenden Passungsverhältnisse dar. Die Flächen 7 und 8 sind die zu verschweißenden Flächen und bilden durch Gestaltung als Spielpassung einen Spalt zur Einbringung eines drahtförmigen Schweißzusatzes zur Herstellung einer metallurgischen Pufferschicht. Die Flächen 9 und 10 bilden die zur Zentrierung der Bauteile notwendige Presspassung, über die nicht nur der Rundlauf der Bauteile im Einsatz, sondern auch die Konstanz des Fügespaltes zwischen den Flächen 7 und 8 sichergestellt wird.

## Patentansprüche

1. Verfahren zur Herstellung einer Mischverbindung eines Gussteiles mit einem Teil aus Stahl durch Schweißen, **dadurch gekennzeichnet, dass** einer der Fügepartner aus dem Gusswerkstoff schwarzer Temperguss besteht.

2. Verfahren nach Anspruch 1, **dadurch gekennzeichnet, dass** Vorwärmung und Schweißen in einem Arbeitsgang durch unterschiedliche Fokussierung des Werkzeuges Hochenergiestrahl erfolgt.
